# EUROPEAN PATENT SPECIFICATION

(11) **EP 2 807 070 B1**
(45) Date of publication and mention of the grant of the patent: **26.08.2020**
(21) Application number: 12823083.6
(22) Date of filing: 31.12.2012
(51) Int. Cl.: B62B 3/18, B62B 5/00, B62B 3/16, B65D 19/42, B65D 21/02, B07C 7/02, B65G 1/07, B62B 3/00

(54) **APPARATUS FOR SELF-LEVELLING STORING A PLURALITY OF OBJECTS SUCH AS TRAYS**
LAGERVORRICHTUNG MIT EINER GEWICHTKOMPENSIERENDEN HUBEINRICHTUNG FÜR EINE MEHRZAHL VON GEGENSTÄNDEN WIE FÄCHER
APPAREIL DE STOCKAGE AUTO-AJUSTABLE EN HAUTEUR POUR UNE PLURALITÉ D'ÉLÉMENTS TEL QUE DES CASIERS

(30) Priority: 24.01.2012 GB 201201135; 21.02.2012 GB 201202948; 16.07.2012 GB 201212605; 09.08.2012 GB 201214223
(43) Date of publication of application: 03.12.2014
(73) Proprietor: Linnell, Michael Charles Snr, Brentwood, Essex CM13 2LX (GB); Linnell, Michael Charles Jnr, Brentwood, Essex CM13 2JZ (GB); Manning, Sharon Ann, Brentwood, Essex CM13 2NX (GB)
(72) Inventor: LINNELL, Michael Charles Snr, Barking, Essex IG11 0DR (GB); LINNELL, Michael Charles Jnr, Barking, Essex IG11 0DR (GB)
(74) Representative: Evens, Paul Jonathan
(86) International application number: PCT/GB2012/053280
(87) International publication number: WO 2013/110913

(56) References cited:
- EP-B1- 1 833 712
- WO-A2-2010/029510
- FR-A1- 2 744 424
- GB-A- 2 205 482
- GB-A- 2 316 367
- GB-A- 2 394 211
- JP-A- H09 215 564
- JP-U- S61 142 792
- US-A- 3 977 689
- US-A- 4 300 611
- US-B1- 6 305 764
- US-B1- 6 450 360

## Description

### TECHNICAL FIELD

The invention relates to apparatus for storing a plurality of objects such as trays, and more particularly, but not exclusively, to a trolley including such apparatus for temporarily storing mail received in the plurality of trays.

### BACKGROUND ART

It is known to provide a trolley for transferring mail from one location (e.g. source) to another location where it is to be sorted. If the mail is received in trays, the trays will typically be stacked one on top of the other, meaning that the height at which a tray must be loaded on to the trolley depends upon the number of trays already stacked on it. Similarly, the height at which a tray must be unloaded from the trolley will depend upon the number of trays stacked beneath it. Such variations in working height are considered at the very least an inconvenience, and possibly even a health and safety issue. Furthermore, once the top trays have been unloaded and emptied, they must be put to one side because they cannot be placed back on the trolley until the last tray has been unloaded. Thus, unloading the trolley in a limited space can be cumbersome and waiting until the last tray is unloaded before placing the empty trays on the trolley may add to the time it takes to return the trolley for re-use.

The present invention has been developed to ameliorate or even overcome the problems with conventional trolleys.

WO 2010/029510 relates to a dolly with an elastically suspended load-bearing surface, and GB2316367 discloses apparatus according to the preamble of appended independent claim 1.

### SUMMARY OF THE INVENTION

In accordance with one aspect of the present invention, there is provided apparatus for storing a plurality of objects according to appended independent claim 1. The apparatus, for storing the plurality of objects such as trays, comprises: at least one post; a platform defining a surface for supporting at least one object, the platform being coupled to the at least one post and moveable therealong between a first position and a second position below the first position when a first object is supported on the surface of the platform; and an expandable container such as a bag for retaining objects on the platform, the expandable container being configured to expand as the platform moves from the first position to the second position, characterized in that the platform comprises a chamber for storing the expandable container when not in use and in a collapsed configuration, with the surface of the platform having at least one door to allow access to the expandable container when stored in the chamber.

The present applicant has found that at least some of the potential difficulties of loading objects (e.g. trays of mail) at many different heights may be reduced by providing a platform which is moveable between the first and second positions.

The platform may be disposed to one lateral side of the at least one post. With such an arrangement, the at least one post is located outside the footprint of the surface of the platform. This means that other objects such as empty trays may be stored underneath the platform. Storing empty trays at a lower level than full trays is easier than storing full trays at different heights.

In one embodiment, the displacement along the at least one post member between the first and second positions may be dependent upon the mass of the first object being supported on the surface of the platform. If the mass and dimensions of the first object are known in advance (as it may well be with a tray filled with predetermined weight of letters), the displacement between the first and second position may be such that a second object may be stacked on top of the first object at a height equivalent to the first position of the platform. Furthermore, up to a limit, the total displacement of the platform from the first position along the at least one post member may depend upon the total mass being supported on the surface of the platform.

The platform may be moveable along the at least one post from the second position to the first position in response to the first object being removed from the surface of the platform. In this way, the platform resumes its original position on removal of the load, allowing a substantially constant loading/unloading height to be maintained.

In one embodiment, movement of the platform along the at least one post between the first and second positions may be controlled by a resilient bias or member, for example an elastic cord or spring. The resilient member may be housed in a channel in the at least one post. The resilient member may be configured to stretch as the platform moves from the first position to the second position. A first end of the resilient member may be attached to a part fixed relative to the platform, and the second end may be attached to a part fixed relative to the at least one post, with the resilient member being configured such that the first end moves towards the second end as the platform moves from the first position to the second position. The resilient member may extend around a pulley. Alternatively, movement of the platform along the at least one post between the first and second positions may be controlled by a hydraulic or pneumatic arrangement.

The platform may be coupled to the at least one post such that it is moveable into an inoperative position when no object is supported on the surface of the platform. The platform may be coupled to the at least one post via a hinge, enabling the surface of the platform to rotate (e.g. through an angle of 90°) from the first (i.e. operative) position into the inoperative position. The surface of the platform may be able to rotate from being substantially horizontal in the first (i.e. operative) position to being substantially vertical in the inoperative position. In this way, the platform may be stored with the surface substantially parallel to the at least one post. When required for use, the platform may be rotated from the inoperative position so that the surface is substantially perpendicular to the at least one post.

The apparatus may comprise a body comprising a plurality of side members, with one side member including the at least one post, the plurality of side members being coupled together via hinges and moveable from an active configuration where the plurality of side members partially surround the platform, to an inactive configuration where at least one side member pivots relative to an adjacent side member (e.g. away from the platform). Moving from the active configuration to the inactive configuration may make it easier to store multiple units of apparatus when not in use by enabling one unit to be nested inside another. In one arrangement, the body nay comprise three side members. One side member (hereinafter referred to as the "central side member") may be coupled via hinges to each of the other two side members (hereinafter referred to as the "lateral side members"). In the active configuration, the lateral side members may be arranged at an angle (e.g. about 90°) to the central member, and in the inactive configuration the lateral side members may be arranged substantially parallel to the central side member. The platform may be supported by the central side member when moving between its operative and in operative positions. Alternatively, the may be supported by one of the lateral side members when moving between its operative and in operative positions. Using one of the lateral side members in this way may give improved access and make it easier for a user to move the platform between its operative and in operative positions

The body of the apparatus may further comprise a base member coupled to one of the side members, and which may help to support the plurality of side members at least in the active configuration. The base member may be rigidly coupled to the said one of the side members, and may have a tapered profile with ground-engaging wheels. The tapered profile may have a leading edge and a trailing edge, with the former being configured to fit within the dimensions of the latter. In this way, the base unit of one apparatus may nest with the base unit of another apparatus for compact storage. Alternatively, the base member may be pivotally coupled to the said one of the side members, and moveable from a substantially horizontal position to a substantially vertical position. In this way, the base member may be stored flush against the said one of the side members when the plurality of side members are in the inactive configuration to facilitate storage of multiple units of apparatus when not in use by nesting one inside another. The plurality of side members may each have a ground-engaging wheel, and at least one may have an open framework construction.

The at least one post may be part of a framework comprising at least one additional post, with the platform being moveably coupled to the or each post. For example, there may be at least three posts in total, for example four posts in total, in the framework. The platform may be disposed between posts of the framework. If the platform is rectangular, one post may be associated with each corner region of the platform. The framework may be configured to be retro-fitted to existing equipment, such as cages and trolleys.

The apparatus may comprise a base with ground-engaging wheels, with the at least one post being mounted on the base. The ground-engaging wheels enable the apparatus to be pushed or pulled over the ground. The base may have a profile to facilitate engagement with forks of a fork-lift vehicle. The apparatus may further comprise a brake for preventing movement of the base over the ground when engaged.

The apparatus may further comprise a retractable cover which conceals the platform when deployed. The retractable cover may engage and slide along a groove in the at least one post.

The apparatus may further comprise one part of a releasable two-part coupling mechanism for engaging a corresponding part mounted on another apparatus in accordance with the present invention. The releasable two-part coupling mechanism may comprise a male part, such as a pivoting latch, and a corresponding female part, such as a keeper. Such an arrangement enables two or more apparatus to be coupled together.

The expandable container such as a bag for retaining objects on the platform may be configured to expand as the platform moves from the first position to the second position. An upper part of the expandable container may be secured to the at least one post, allowing a lower part to move in sympathy with the platform. The expandable container may be releasably secured to the at least one post, enabling its independent use. The chamber for storing the expandable container when not in use and in a collapsed configuration is accessed through at least one door in the surface of the platform. The at least one door may be hinged for pivotal movement between a closed configuration and an open configuration. In this way, the expandable container may be readied for use simply by opening the at least one hinged door and securing the upper part of the expandable container to the at least one post (e.g. using a strap with clasp for engaging an anchorage point on the at least one post).

In accordance with another aspect of the present invention there is provided a kit of parts for retro-fitting to an assembly, comprising the apparatus of the first aspect of the invention. The assembly may comprise a body defining a base, and may have walls around the base. The body may include ground-engaging wheels, and may be a trolley.

### BRIEF DESCRIPTION OF THE DRAWINGS

Figure 1 shows a schematic perspective view of an apparatus according to the present disclosure;
Figures 2A and 2B show perspective views of the apparatus of Figure 1 in loaded and unloaded configurations;
Figure 3 is an exploded perspective and cut-away view showing detail of the apparatus of Figure 1;
Figure 4 shows schematically a kit of key parts of the apparatus of Figure 1 for retro-fitting to an existing trolley;
Figure 5 shows one variant of the apparatus of Figure 1;
Figure 6 shows another variant of the apparatus of Figure 1;
Figure 7 is a sectional view showing detail of the apparatus of Figure 1;
Figure 8 shows yet another variant of the apparatus of Figure 1; and
Figure 9 shows optional features for use with the apparatus of Figure 1;
Figure 10 shows further optional features for use with the apparatus of Figure 1;
Figures 11A and 11B show perspective views of apparatus embodying the present invention;
Figures 12A and 12B show schematic perspective views of another apparatus embodying the present invention; and
Figures 13A, 13B and 13C illustrate yet another apparatus embodying the present invention.

### DETAILED DESCRIPTION OF SPECIFIC EMBODIMENTS

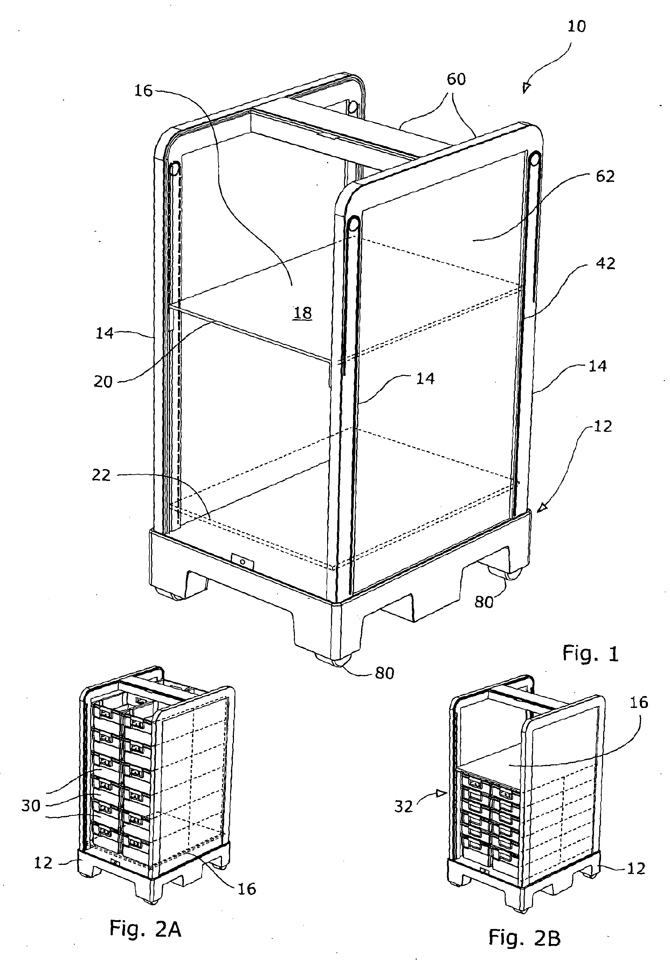

Figure 1 illustrates apparatus 10 comprising a base 12, a plurality of posts 14 attached to the base 12, and a platform 16 defining a surface 18 for supporting at least one mail tray. The platform 16 is coupled to the four posts 14 and is moveable therealong between a first position 20 and a second position 22 (shown in phantom lines) below the first position 20 when a first object (e.g. a full tray 30) is supported on the surface 18 of the platform 16. As more full trays 30 are stacked on the apparatus 10, the platform 16 is displaced further from the first position 20 until eventually it reaches the base 12, as shown in figure 2A. As the full trays 30 are unloaded from the apparatus 10, the platform 16 rises upwards until it returns to the first position 20 when none remain on the surface 18. As the platform 16 rises, a space 32 between the platform 16 and the base 12 opens up and is a convenient place to store empty trays in a nested configuration as shown in figure 2B.

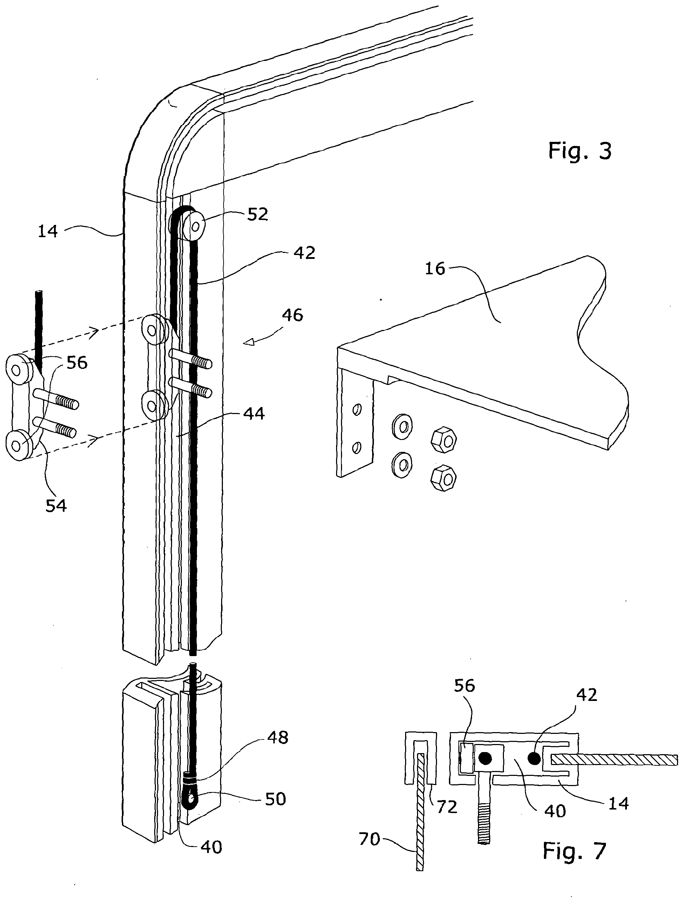

As shown in figure 3, each post 14 comprises a channel 40 housing a resilient bias in the form of an elastic cord 42. One end 44 of the elastic cord 42 is attached to a bracket 46 which is fixed relative to the platform 16. The other end 48 of the elastic cord 42 is attached to an anchor point 50 which is fixed relative to the post 14 and which is located near the base 12. The elastic cord 42 extends almost the full length of the post 14, passing over a pulley-like arrangement 52. The bracket 46 includes a carriage 54 with wheels 56 to guide smooth movement of the platform 16 along the post 14. When an object is placed on the platform 16, the load is transferred to the elastic cords 42, which stretch enabling the end 44 to move towards the end 48. The extension of the elastic cords 42 control the displacement between the first position 20 and the second position 22, which in turn depends upon the load applied by the object resting on the platform 16.

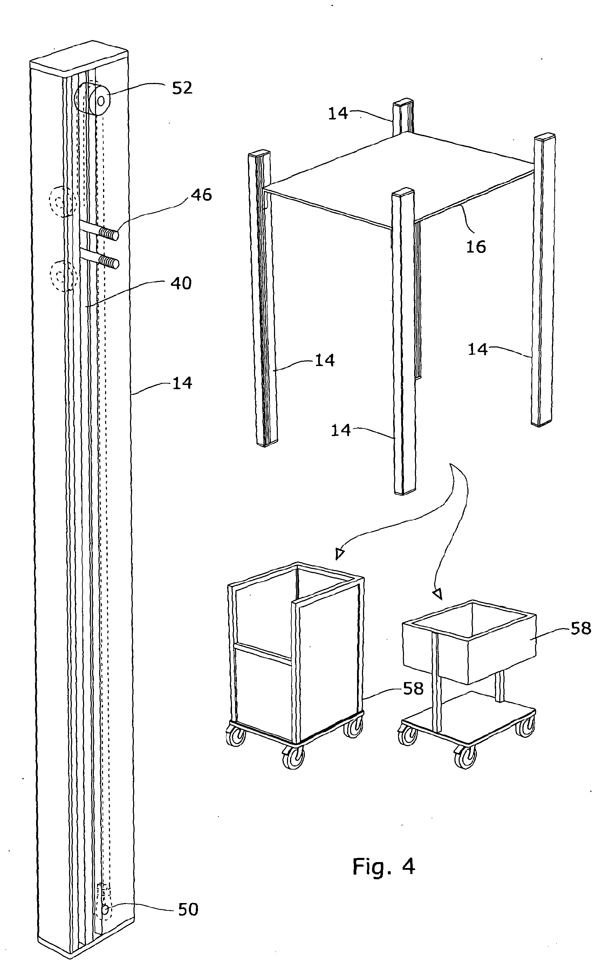

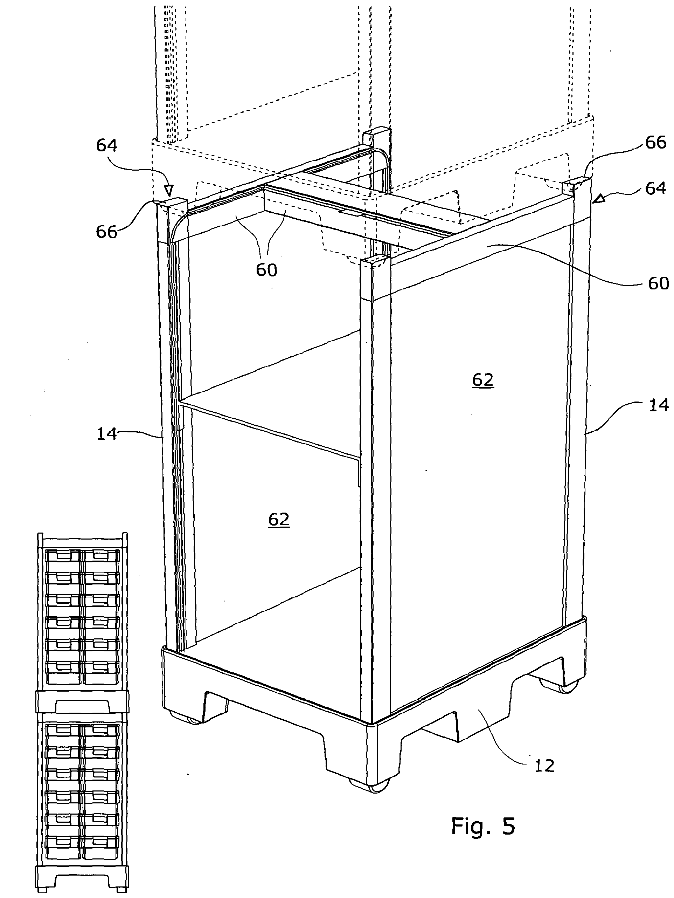

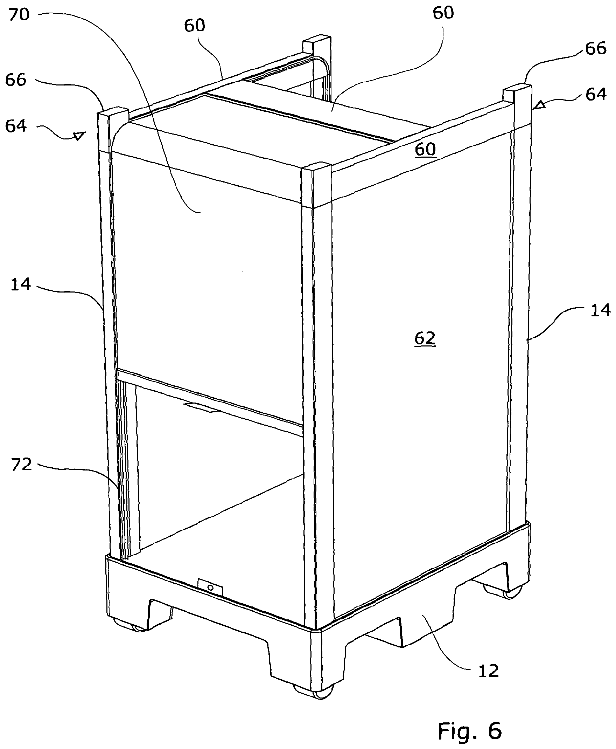

The posts 14 and platform 16 may be retrofitted to existing cage/trolley designs 58, as shown in figure 4. Alternatively, the posts 14 may form part of a larger framework including central and side beams 60 and side panels 62 to make a rigid structure capable of being stacked as shown in Figure 5. The upper ends 64 of the posts 14 have a raised profile 66 to aid location with a structure (e.g. another apparatus 10) stacked thereabove. Such raised profiles 66 may be incorporated into the apparatus 10 of Figure 1, as shown in Figure 6. Alternatively or additionally, the apparatus 10 may include a pair of retractable blinds 70, as shown in Figure 6. Each blind 70 extends from central beam 60 and slides along a pair of channels 72 in opposing faces of posts 14, as shown in Figure 7.

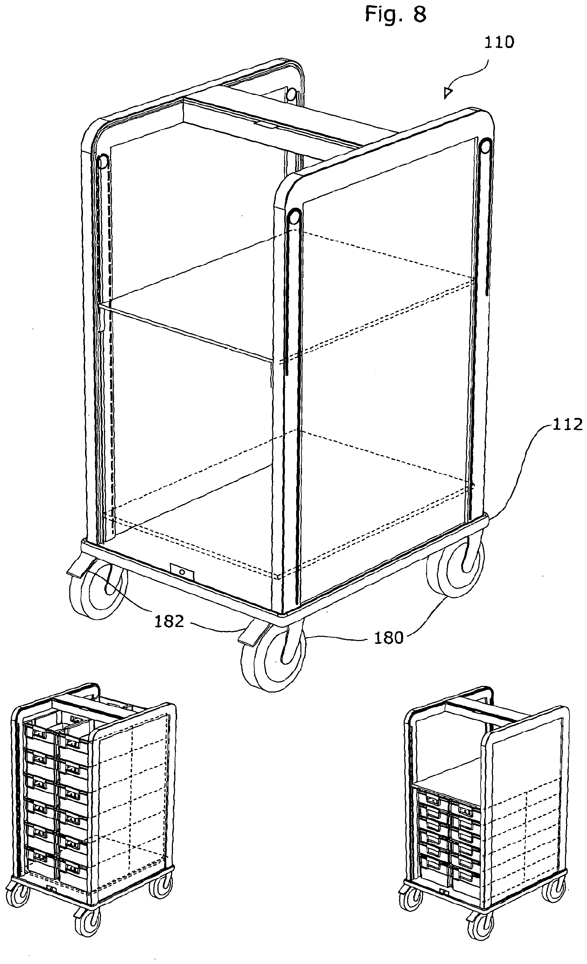

The base 12 in the apparatus 10 of figures 1 to 7 has a profile configured to facilitate engagement with forks of a fork-lift vehicle. The base 12 has ground-engaging wheels 80 to help push/pull the apparatus 10 along the ground. Figure 8 shows an alternative apparatus 110, with a conventional trolley base 112 with ground-engaging wheels 180 and brakes 182. Otherwise the apparatus 110 is the same as apparatus 10.

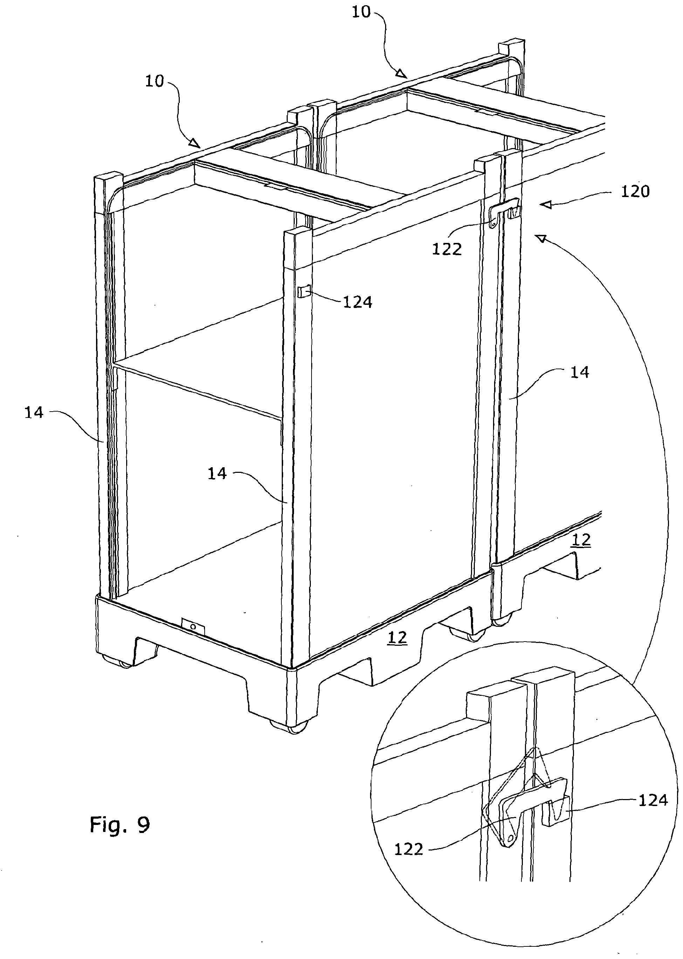

Multiple apparatus 10 may be used in close proximity, and it may be beneficial to releasable link one to another, for example to maintain a predetermined order in a sequence. Accordingly, the apparatus 10 may be provided with releasable couplings 120 for attaching one unit to another as shown in Figure 9. The releasable couplings 120 may be many different forms, but could include a male coupling part such as a pivoting latch 122 and a corresponding female coupling part such as a keeper 124. Each apparatus 10 may have one or more male coupling parts positioned along one side and one or more corresponding female coupling parts positioned along an opposing side. In this way, the male coupling part(s) of one apparatus 10 may be registered with and engage the corresponding female coupling part(s) of another apparatus (10) when linking the two together.

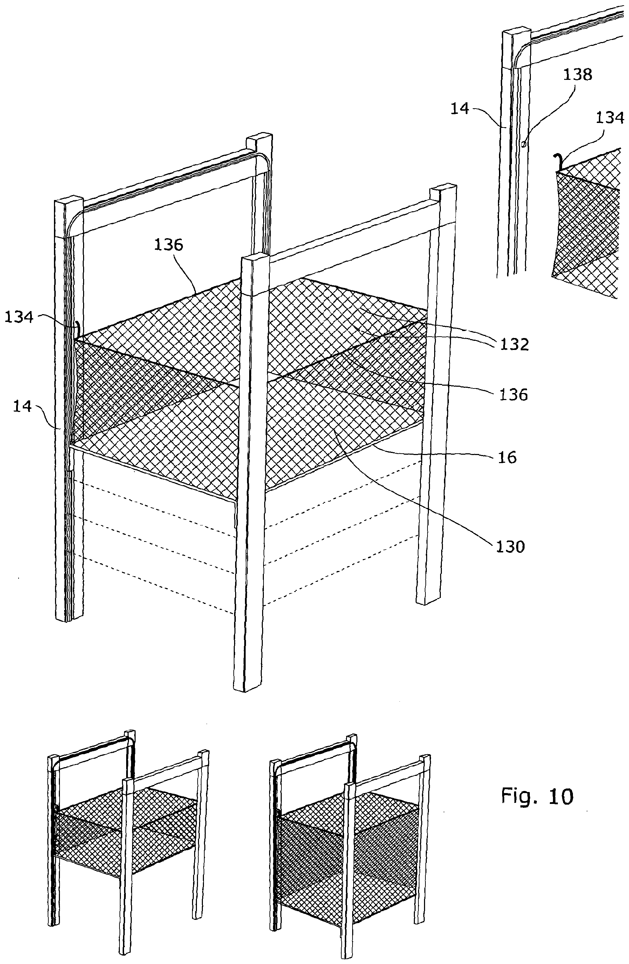

In some instances, it may not be necessary to store objects in trays on the platform 16. Figure 10 illustrates an expanding bag 130 used to retain objects on the platform 16. The expanding bag 130 comprises a mesh of elasticated cords or netting configured to concertina, and is held open using hooks 134 which attach the bag opening 136 to anchorage points (e.g. holes) 138 in the posts 14. The bag opening 136 may be reinforced (e.g. with a non-stretch fabric) to prevent sagging. As objects are placed in the expanding bag 130 and rest on the platform 16, the platform 16 moves as before to the lower position 22. In doing so, the bag opening 136 remains fixed to the posts 14, forcing the expanding bag 130 to expand. The objects may subsequently be removed from the platform 16 in the expandable bag 130, simply by detaching the expandable bag 130 from the posts 14.

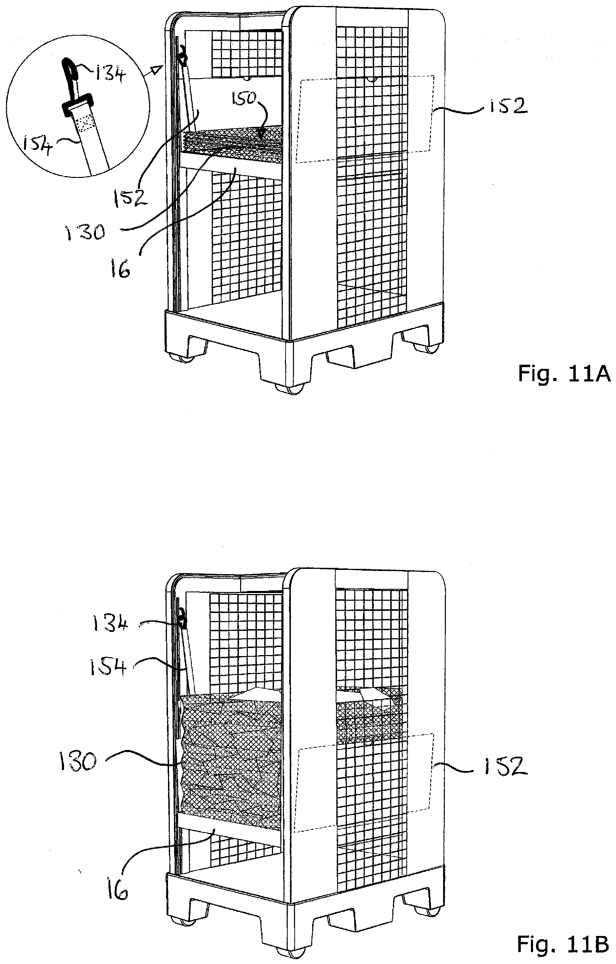

Figures 11A and 11B illustrate an embodiment of the present invention which uses the expanding bag 130. The platform 16 comprises a chamber 150 for storing the expanding bag 130 when not in use and in a collapsed configuration. The chamber 150 is accessed through a pair of hinged doors 152 in the surface 18 of the platform 16. The doors 152 are moveable from a closed configuration (completely covering the chamber 150) to an open configuration as shown in Figure 11A allowing the expanding bag 130 to be deployed out of the platform 16. The hooks 134 are secured to the bag opening 136 using a tether (e.g. strapping) 154 which allow easy access to the anchorage points 138 even when the doors 152 are in the open configuration.

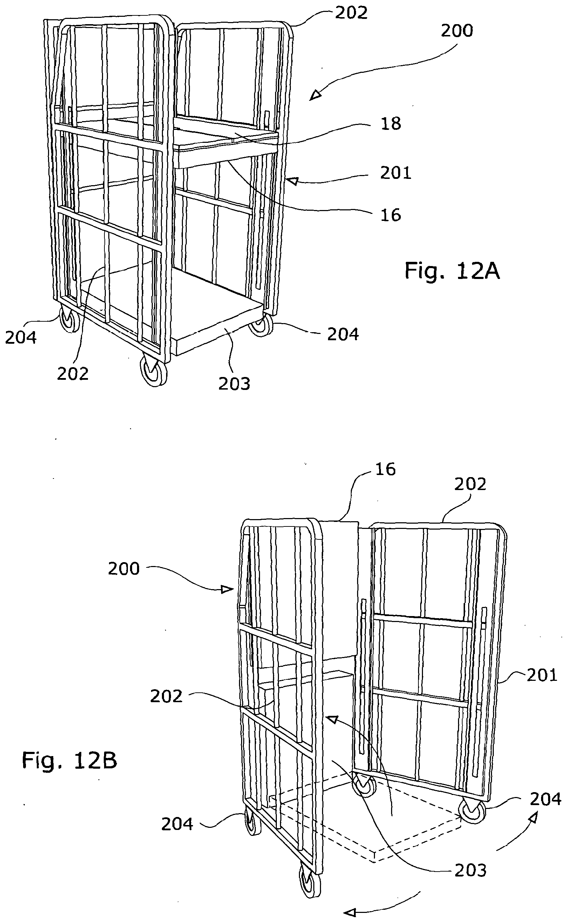

Figures 12A and 12B illustrate another embodiment of the present invention in the form of apparatus 200 comprising a body 201 comprising three side members 202 and a base member 203. The side members 202 have ground-engaging wheels 204 and comprise an open-framework construction which includes/incorporates the plurality of posts 14 and the platform 16 described with reference to previous arrangements illustrated in Figures 1-11. The platform 16 comprises the chamber 150 for storing the expanding bag 130 described with reference to figures 11A and 11B. In the apparatus 200, the platform 16 is pivotally coupled to at least one post 14 via a hinge arrangement such that the surface 18 of the platform 16 may be rotated from being substantially horizontal (i.e. in its operative position) to being substantially vertical (i.e. in an inoperative position). In this way, the platform 16 may be stored with its surface 18 substantially parallel to at least one post 14 when the apparatus 200 is not in use.

The side members 202 are pivotally coupled together, and are moveable from a closed configuration (as shown in Figure 12A) where the side members 202 partially surround the platform 16, to an open configuration (as shown in Figure 12B) where at least one side member 202 has pivoted away from the platform 16. In a similar way to the platform 16, the base member 203 is pivotally coupled to one side member 202 via a hinge arrangement such that the surface 18 of the platform 16 may be rotated from being substantially horizontal (i.e. in its operative position) to being substantially vertical (i.e. in an inoperative position). With the side members 202 in the open configuration, and the base member 203 and platform 16 oriented vertically (i.e. the inoperative position), it becomes possible to store multiple units of apparatus 200 in a compact manner, with one nested inside the other.

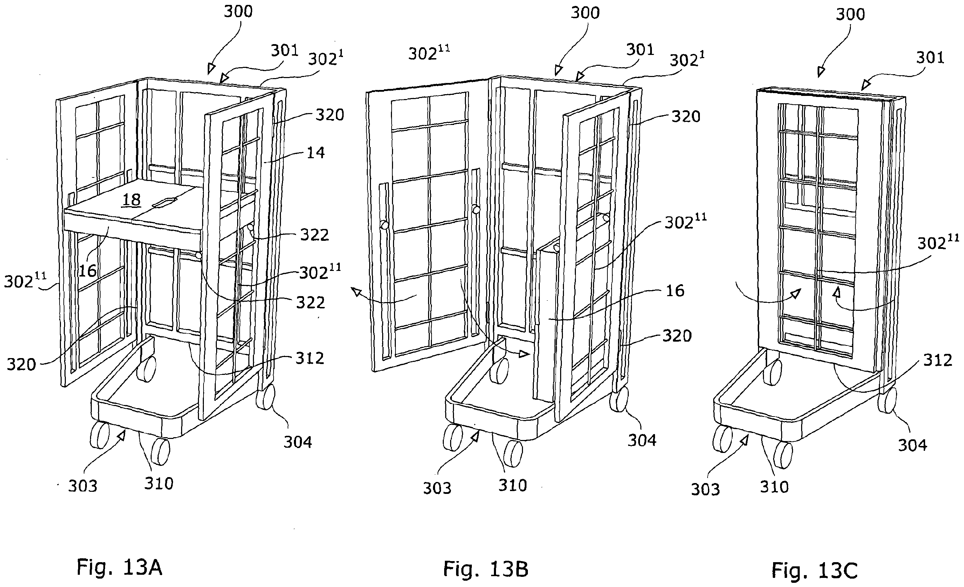

Figures 13A, 13B and 13C illustrate yet another embodiment of the present invention in the form of apparatus 300 comprising a body 301 comprising three side members 302 and a base member 303. The base member 303 has ground-engaging wheels 304 and has a tapered profile including a leading edge 310 and a trailing edge 312. The leading edge 310 is both narrower and lower than the trailing edge 312, such that the leading edge 310 of one base member 303 may slide within the trailing edge 312 of another identical base member 303' (not shown) when nesting one apparatus 300 with another.

The side members 302 comprise an open-framework construction which includes/incorporates the plurality of posts 14 and the platform 16 described with reference to previous arrangements illustrated in Figures 1-11. The platform 16 comprises the chamber 150 for storing the expanding bag 130 described with reference to Figures 11A and 11B. The middle side member 302' is mounted to the trailing edge 312 of base member 303, and the other two side members 302" (hereinafter referred to as outer side members 302) are pivotally coupled via hinges 320 to the middle side member 302'. The platform 16 is pivotally coupled to one of the outer side members 302" via sliding hinges 322, such that the surface 18 of the platform may be rotated from being substantially horizontal (i.e. in its operative position) to being substantially vertical (i.e. in an inoperative position). In this way, the platform may be stored with its surface 18 substantially vertical to at least one post 14 when the apparatus 300 is not in use.

The outer side members 302" are pivotally coupled to the middle side member 302', and are moveable from a deployed configuration (as shown in Figure 13A) where the outer side members 302" are perpendicular to the middle side member 302', to a retracted configuration (as shown in Figure 13C) where the outer side members 302" are parallel to the middle side member 302'. The outer side members 302" may only be moved into the retracted configuration once the platform 16 has been rotated into the inoperative position, flush against one of the outer side members 302". With the outer side members 302" in the retracted configuration, it is possible to store multiple units of apparatus 300 in a compact manner, with one nested inside the other.

## Claims

1. Apparatus (10), (200), (300) for storing a plurality of objects, comprising:
at least one post (14);
a platform (16) defining a surface (18) for supporting at least one object, the platform (16) being coupled to the at least one post (14) and moveable therealong between a first position (20) and a second position (22) below the first position when a first object (30) is supported on the surface (18) of the platform (16); and
an expandable container (130) for retaining objects on the platform (16), the expandable container (130) being configured to expand as the platform (16) moves from the first position (20) to the second position (22),
**characterised in that** the platform (16) comprises a chamber (150) for storing the expandable container (130) when not in use and in a collapsed configuration, with the surface (18) of the platform (16) having at least one door (152) to allow access to the expandable container (130) when stored in the chamber (150).

2. Apparatus (10), (200), (300) according to claim 1, in which the platform (16) is disposed to one lateral side of the at least one post (14).

3. Apparatus (10), (200), (300) according to claim 1 or claim 2, in which displacement of the platform (16) along the at least one post (14) between the first and second positions is dependent upon the mass of the first object (30) being supported on the surface of the platform (16).

4. Apparatus (10), (200), (300) according to any one of claims 1 to 3, in which the platform (16) is moveable along the at least one post (14) from the second position (22) to the first position (20) in response to the mass of the first object (30) being removed from the surface (18) of the platform (16).

5. Apparatus (10), (200), (300) according to any one of the claims 1 to 4, in which movement of the platform (16) along the at least one post (14) between the first and second positions is controlled by a resilient member (42).

6. Apparatus (10), (200), (300) according to claim 5, in which the resilient member (42) is configured to stretch as the platform (16) moves from the first position (20) to the second position (22).

7. Apparatus (200), (300) according to any one of the preceding claims, in which the platform (16) is coupled to the at least one post (14) such that it is moveable into an inoperative position when no object is supported on the surface (18) of the platform (16).

8. Apparatus (200), (300) according to any one of the preceding claims, further comprising a body (201), (301) comprising a plurality of side members (202), (302), with one side member including the at least one post (14), the plurality of side members (202), (302) being hinged together and moveable from an active configuration where the plurality of side members (202), (302) partially surround the platform (16), to an inactive configuration where at least one side member pivots relative to an adjacent side member.

9. Apparatus (300) according to claim 8, in which the body (301) furthers comprises a base member (303) rigidly coupled to one of the side members.

10. Apparatus (200) according to claim 8, in which the body (201) furthers comprises a base member (203) pivotally coupled to one of the side members, and moveable from a substantially horizontal position to a substantially vertical position.

11. Apparatus (10), (200), (300) according to any one of the preceding claims, in which the at least one post (14) is part of a framework comprising at least one additional post, with the platform (16) being moveably coupled to the or each additional post.

12. Apparatus (10), (200), (300) according to any one of the preceding claims, further comprising a base (12), (203), (303) with ground-engaging wheels (80), (204), (304), with the at least one post (14) being mounted on the base (12), (203), (303).

13. Apparatus (10), (200), (300) according to claim 1, in which an upper part of the expandable container (130) is secured to the at least one post (14), allowing a lower part to move in sympathy with the platform (16).

14. A kit of parts for retro-fitting to a trolley, comprising apparatus (10) according to any one of claims 1 to 11 and 13.

## Patentansprüche

1. Vorrichtung (10), (200), (300) zum Lagern einer Mehrzahl von Objekten, umfassend: mindestens einen Pfosten (14);
eine Plattform (16), die eine Oberfläche (18) zum Stützen des mindestens einen Objekts definiert, wobei die Plattform (16) mit dem mindestens einen Pfosten (14) gekoppelt und zwischen einer ersten Position (20) und einer zweiten Position (22) unterhalb der ersten Position an ihm entlang beweglich ist, wenn ein erstes Objekt (30) auf der Oberfläche (18) der Plattform (16) gestützt wird; und
ein erweiterbarer Behälter (130) zum Halten der Objekte auf der Plattform (16), wobei der erweiterbare Behälter (130) konfiguriert ist, um sich zu erweitern, wenn sich die Plattform (16) von der ersten Position (20) zur zweiten Position (22) bewegt,
**dadurch gekennzeichnet, dass** die Plattform (16) eine Kammer (150) zum Lagern des erweiterbaren Behälters (130) umfasst, wenn er nicht in Gebrauch und in einer zusammengeklappten Konfiguration ist, wobei die Oberfläche (18) der Plattform (16) mindestens eine Tür (152) aufweist, um einen Zugriff auf den erweiterbaren Behälter (130) zu ermöglichen, wenn er in der Kammer (150) gelagert ist.

2. Vorrichtung (10), (200), (300) nach Anspruch 1, wobei die Plattform (16) an mindestens einer lateralen Seite des mindestens einen Pfostens (14) angeordnet ist.

3. Vorrichtung (10), (200), (300) nach Anspruch 1 oder Anspruch 2, wobei eine Verschiebung der Plattform (16) entlang des mindestens einen Pfostens (14) zwischen der ersten und der zweiten Position von der Masse des auf der Oberfläche der Plattform (16) gestützten ersten Objekts (30) abhängt.

4. Vorrichtung (10), (200), (300) nach einem der Ansprüche 1 bis 3, wobei die Plattform (16) entlang dem mindestens einen Pfosten (14) aus der zweiten Position (22) in die erste Position (20) in Reaktion darauf bewegt werden kann, dass die Masse des ersten Objekts (30) von der Oberfläche (18) der Plattform (16) entfernt wird.

5. Vorrichtung (10), (200), (300) nach einem der Ansprüche 1 bis 4, wobei eine Bewegung der Plattform (16) entlang dem mindestens einen Pfosten (14) zwischen der ersten und zweiten Position durch ein elastisches Element (42) gesteuert wird.

6. Vorrichtung (10), (200), (300) nach Anspruch 5, wobei das elastische Element (42) konfiguriert ist, um sich zu dehnen, wenn sich die Plattform (16) aus der ersten Position (20) in die zweite Position (22) bewegt.

7. Vorrichtung (200), (300) nach einem der vorangehenden Ansprüche, wobei die Plattform (16) mit dem mindestens einen Pfosten (14) so gekoppelt ist, dass sie in eine inoperative Position bewegt werden kann, wenn kein Objekt auf der Oberfläche (18) der Plattform (16) gestützt wird.

8. Vorrichtung (200), (300) nach einem der vorangehenden Ansprüche, ferner umfassend einen Körper (201), (301), umfassend eine Mehrzahl von Seitenelementen (202), (302), wobei ein Seitenelement den mindestens einen Pfosten (14) beinhaltet, wobei die Mehrzahl von Seitenelemente (202), (302) scharnierförmig miteinander verbunden sind und aus einer aktiven Konfiguration, in der die Mehrzahl von Seitenelementen (202), (302) die Plattform (16) teilweise umgeben, in eine inaktive Konfiguration, in der mindestens ein Seitenelement relativ zu einem benachbarten Seitenelement schwenkt, bewegt werden kann.

9. Vorrichtung (300) nach Anspruch 8, wobei der Körper (301) ferner ein Basiselement (303) umfasst, das starr mit einem der Seitenelemente gekoppelt ist.

10. Vorrichtung (200) nach Anspruch 8, wobei der Körper (201) ferner ein Basiselement (203) umfasst, das schwenkbar mit einem der Seitenelemente gekoppelt ist und aus einer im Wesentlichen horizontalen Position in eine im Wesentlichen vertikale Position bewegt werden kann.

11. Vorrichtung (10), (200), (300) nach einem der vorangehenden Ansprüche, wobei der mindestens eine Pfosten (14) ein Teil eines Gestells ist, das mindestens einen zusätzlichen Pfosten umfasst, wobei die Plattform (16) beweglich an den oder jeden zusätzlichen Pfosten gekoppelt ist.

12. Vorrichtung (10), (200), (300) nach einem der vorangehenden Ansprüche, ferner umfassend eine Basis (12), (203), (303) mit den Boden in Eingriff nehmenden Rädern (80), (204), (304), wobei der mindestens eine Pfosten (14) an der Basis (12), (203), (303) montiert ist.

13. Vorrichtung (10), (200), (300) nach Anspruch 1, wobei ein oberer Teil des erweiterbaren Behälters (130) an dem mindestens einen Pfosten (14) befestigt ist, wodurch es einem unteren Teil ermöglicht wird, sich gleichzeitig mit der Plattform (16) zu bewegen.

14. Teileset zum Nachrüsten eines Wagens, umfassend eine Vorrichtung (10) nach einem der Ansprüche 1 bis 11 und 13.

## Revendications

1. Appareil (10), (200), (300) pour le stockage d'une pluralité d'objets, comprenant :
au moins un montant (14) ;
une plate-forme (16) définissant une surface (18) pour supporter au moins un objet, la plate-forme (16) étant couplée à l'au moins un montant (14) et pouvant être déplacée le long de celui-ci entre une première position (20) et une deuxième position (22) sous la première position, lorsqu'un premier objet (30) est supporté sur la surface (18) de la plate-forme (16) ; et
un récipient extensible (130) pour la fixation d'objets sur la plate-forme (16), le récipient extensible (130) étant configuré pour se détendre au fur et à mesure que la plate-forme (16) se déplace de la première position (20) à la deuxième position (22),
**caractérisé en ce que** la plate-forme (16) comprend une chambre (150) pour le stockage du récipient extensible (130) lorsqu'il n'est pas utilisé et se trouve dans une configuration repliée, la surface (18) de la plate-forme (16) possédant au moins une porte (152) permettant d'accéder au récipient extensible (130) lorsqu'il est stocké dans la chambre (150).

2. Appareil (10), (200), (300) selon la revendication 1, dans lequel la plate-forme (16) est disposée sur un côté latéral de l'au moins un montant (14).

3. Appareil (10), (200), (300) selon la revendication 1 ou la revendication 2, dans lequel le déplacement de la plate-forme (16) le long de l'au moins un montant (14) entre les première et deuxième positions est tributaire du soutien de la masse du premier objet (30) sur la surface de la plate-forme (16).

4. Appareil (10), (200), (300) selon une quelconque des revendications 1 à 3, dans lequel la plate-forme (16) peut être déplacée le long de l'au moins un montant (14) de la deuxième position (22) à la première position (20) en réponse à l'enlèvement, de la surface (18) de la plate-forme (16), de la masse du premier objet (30).

5. Appareil (10), (200), (300) selon une quelconque des revendications 1 à 4, dans lequel la régulation du déplacement de la plate-forme (16) le long de l'au moins un montant (14) entre les première et deuxième positions est assuré par un élément élastique (42).

6. Appareil (10), (200), (300) selon la revendication 5, dans lequel l'élément élastique (42) est configuré pour s'étirer lorsque la plate-forme (16) se déplace de la première position (20) à la deuxième position (22).

7. Appareil (200), (300) selon une quelconque des revendications précédentes, dans lequel la plate-forme (16) est couplée à l'au moins un montant (14) de façon à pouvoir être déplacée dans une position non fonctionnelle lorsqu'aucun objet n'est supporté sur la surface (18) de la plate-forme (16).

8. Appareil (200), (300) selon une quelconque des revendications précédentes, comprenant en outre un corps (201), (301) comprenant une pluralité d'éléments latéraux (202), (302), un élément latéral comprenant l'au moins un montant (14), les éléments de la pluralité d'éléments latéraux (202), (302) étant articulés ensemble, et pouvant être déplacés d'une configuration active, dans laquelle la pluralité d'éléments latéraux (202), (302) entoure partiellement la plate-forme (16), à une configuration inactive, dans laquelle au moins un élément latéral pivote relativement à un élément latéral adjacent.

9. Appareil (300) selon la revendication 8, dans lequel le corps (301) comprend en outre un élément de base (303) couplé de façon rigide à un des éléments latéraux.

10. Appareil (200) selon la revendication 8, dans lequel le corps (201) comprend en outre un élément de base (203) couplé de façon pivotante à un des éléments latéraux, et pouvant être déplacé d'une position substantiellement horizontale à une position substantiellement verticale.

11. Appareil (10), (200), (300) selon une quelconque des revendications précédentes, dans lequel l'au moins un montant (14) fait partie d'une structure comprenant au moins un montant additionnel, la plate-forme (16) pouvant être couplée de façon mobile au montant ou à chaque montant additionnel.

12. Appareil (10), (200), (300) selon une quelconque des revendications précédentes, comprenant en outre une embase (12), (203), (303) dotée de roues en contact avec le sol (80), (204), (304), l'au moins un montant (14) étant monté sur l'embase (12), (203), (303).

13. Appareil (10), (200), (300) selon la revendication 1, dans lequel une partie supérieure du récipient extensible (130) est fixée à l'au moins un montant (14), en permettant le déplacement d'une partie inférieure de façon solidaire avec la plate-forme (16).

14. Kit de pièces pour le rééquipement sur un chariot, comprenant l'appareil (10) selon une quelconque des revendications 1 à 11 et 13.
